# EUROPÄISCHE PATENTSCHRIFT

(11) **EP 3 439 854 B1**
(45) Veröffentlichungstag und Bekanntmachung des Hinweises auf die Patenterteilung: **05.08.2020**
(21) Anmeldenummer: 17703945.0
(22) Anmeldetag: 02.02.2017
(51) Int. Cl.: B29C 64/153, B29C 64/393, G05B 19/401, B33Y 50/02

(54) **VERFAHREN ZUR KALIBRIERUNG WENIGSTENS EINES SCANNSYSTEMS, EINER SLS- ODER SLM-ANLAGE**
METHOD FOR CALIBRATING AT LEAST ONE SCANNING SYSTEM OF AN SLS OR SLM INSTALLATION
PROCÉDÉ D'ÉTALONNAGE D'AU MOINS UN SYSTÈME DE BALAYAGE D'UNE INSTALLATION DE FRITTAGE PAR LASER OU DE FUSION PAR LASER

(30) Priorität: 07.04.2016 DE 102016106403
(43) Veröffentlichungstag der Anmeldung: 13.02.2019
(73) Patentinhaber: CL Schutzrechtsverwaltungs GmbH, 96215 Lichtenfels (DE)
(72) Erfinder: HERZOG, Frank, 96215 Lichtenfels (DE); BECHMANN, Florian, 96215 Lichtenfels (DE); ZEULNER, Fabian, 96215 Lichtenfels (DE)
(74) Vertreter: Hafner & Kohl PartmbB
(86) Internationale Anmeldenummer: PCT/EP2017/052273
(87) Internationale Veröffentlichungsnummer: WO 2017/174226

(56) Entgegenhaltungen:
- EP-A2- 2 186 625
- WO-A1-2009/018857
- US-A- 5 832 415
- US-A1- 2016 082 668

## Beschreibung

Die Erfindung betrifft ein Verfahren zur Kalibrierung wenigstens eines Scannsystems einer Lasersinter- oder Laserschmelzanlage mit den weiteren Merkmalen des Anspruches 1.

Lasersinter- oder Laserschmelzanlagen sind dafür vorgesehen, durch Verfestigung eines insbesondere pulverartigen Baumaterials mittels Laserstrahlung dreidimensionale Gegenstände im Wege eines Rapid-Manufacturing-Verfahrens herzustellen. Dabei wird der Strahl einer Lichtquelle, meistens eines Lasers, über ein Scannersystem auf eine Baufläche geleitet, auf der sich eine dünne Schicht des Baumaterials befindet. Der fokussierte Laserstrahl ist geeignet, das Baumaterial an- oder aufzuschmelzen, nach Abkühlung des dadurch gebildeten Schmelzepools oder der Schmelzestelle verfestigt sich das Baumaterial an dieser Stelle und bildet den durch sukzessives anhaften und selektives Verfestigen weiterer Schichten den dreidimensionalen Gegenstand.

Für die Genauigkeit und Reproduzierbarkeit des Bauvorgangs ist es von höchster Wichtigkeit, dass das oder die Scannsysteme einer solchen Lasersinter- oder Laserschmelzanlage hinsichtlich ihrer Strahlfokusposition exakt das widergeben, was in einem den Bauprozess steuernden Bauprogramm gespeichert ist, mit anderen Worten die Linienführung des Laserstrahls im Bereich der Baufeldebene nicht von einer abgespeicherten Solllinienführung abweicht, die durch die Scannsysteme abgebildet werden soll.

Als Stand der Technik ist es bekannt, die Scanner manuell möglichst genau auszurichten und diese manuelle Ausrichtung sodann Software-technisch zu überprüfen. Dies ist zeitaufwändig, sodass eine derartige Einjustierung der Scannersysteme meist nur ein oder zweimal jährlich vorgenommen wird. Neben dem hohen Zeitaufwand einer solchen manuellen Einjustierung ist diese auch mit vielen Fehlermöglichkeiten behaftet. Das Dokument US 5,832,415 offenbart ein Verfahren zur Kalibrierung wenigstens eines Scannsystems einer Lasersinter (SLS)- oder Laserschmelz (SLM)-Anlage, in welcher mittels des wenigstens einen Scannsystems der gebündelte Strahl wenigstens einer Strahlquelle, insbesondere eines Lasers, auf ein Baufeld gelenkt wird, um bei einem Bauvorgang dort ein Sinter- oder schmelzfähiges Baumaterial an- oder aufzuschmelzen und dessen Abkühlung selektiv zu verfestigen. Das Verfahren weist die folgenden Kalibrierungs-Verfahrensschritte auf: - Erzeugung wenigstens eines Linienmusters, insbesondere eines Scanngitters durch das wenigstens eine Scannsystem auf einer Oberfläche in der Ebene des Baufeldes; - Vornahme einer Feldkorrektur des Linienmusters durch Berechnung von Korrekturdaten betreffend das im Wesentlichen eine Scannsystem, die die erforderlichen Informationen zur Korrektur etwaiger Verzerrungen des Linienmusters, insbesondere des Scanngitters enthalten, und - nachfolgende Korrektur des Linienmusters zur Vermeidung von Abbildungsfehlern.

Der Erfindung liegt die Aufgabe zugrunde, ein Verfahren zur Kalibrierung wenigstens eines Scannsystems einer Lasersinter- oder Laserschmelzanlage derart auszubilden, dass das Verfahren in kurzer Zeit durchführbar ist, automatisch erfolgen kann und damit theoretisch vor jedem einzelnen Bauvorgang durchgeführt werden kann. Diese Aufgabe wird durch die kennzeichnenden Merkmale des Anspruches 1 gelöst, vorteilhafte Weiterbildung, insbesondere auch im Hinblick auf die mehrere Scannsysteme, ergeben sich aus den Unteransprüchen. Im Einzelnen sieht das Verfahren folgende Kalibrierungsverfahrensschritte vor.

Zunächst einmal wird ein Linienmuster, insbesondere ein Liniengitter in Form eines Scanngitters durch das wenigstens eine Scannsystem auf einer Oberfläche in der Ebene des Baufeldes erzeugt. Die Anzeige auf dem Flächenelement ist temporär sichtbar. Eine nur temporäre Anzeige des Linienmusters kann von einer über dem Baufeld angeordneten kalibrierten Kamera erfasst werden und in einen Speicher eingelesen werden.

Es liegt im Rahmen der Erfindung, das scannererzeugte Linienmuster auf die Oberfläche einer Kalibrierplatte zu werfen, die auf ihrer Oberfläche bereits ein aufgebrachtes Solllinienmuster trägt. Dann kann die Abweichung des durch das wenigstens eines Scannsystems erzeugten Linienmusters vom Solllinienmuster durch eine über dem Baufeld angeordnete Kamera erfasst und ebenfalls in einen Speicher eingelesen werden. Die Abweichungsdaten werden analysiert und aus dieser elektronischen Analyse, die in einem Prozessor vorgenommen wird, eine Feldkorrektur des Linienmusters durch Berechnung von Korrekturdaten erfolgen, die die erforderlichen Informationen zur Korrektur etwaiger Verzerrungen des Linienmusters, insbesondere des Scanngitters enthalten. Angesprochen sind insbesondere kissenförmige, tonnenförmige, rautenförmige oder rechteckförmige Verzerrungen eines z. B. quadratischen oder sonstigen Sollmusters und dergleichen. Korrekturen sind in jeglicher Hinsicht denkbar.

Bislang hat sich das geschilderte Verfahren auf eine Kalibrierung nur eines Scanners bezogen, wobei natürlich zwei Scanner jeweils für sich und ggf. unabhängig voneinander auf die vorbeschriebene Weise korrigiert werden können. In Weiterbildung des Verfahrens ist es nun möglich, nach Korrektur eventueller Verzerrungen des Linienmusters bei einer Mehrzahl von Scannsystemen über ein und demselben Baufeld ein Belichten und dabei ein Erzeugen von Positionslinienmustern vorzunehmen und dann eine Einjustierung dieser Positionslinienmuster, insbesondere Positionsgitter der jeweiligen Mehrzahl von Scannsystemen zueinander vorzunehmen, die hinsichtlich eventueller Verzerrungen für sich bereits scannsystemintern korrigiert sind. Dazu wird eine Berechnung von weiteren Korrekturdaten betreffend eine ggf. erforderliche Drehung, ein Offset, eine Skalierung und/oder eine Verschiebung im Bezug der Systeme zueinander derart, dass durch Anwendung der weiteren Korrekturdaten auf mehrere Scannsysteme eine gegenseitige Aus- und Einrichtung mehrerer Scannsysteme zueinander erfolgt. Dadurch können zum Beispiel die Linienmuster mehrerer Scannsysteme genau in Deckung gebracht werden oder seitlich nebeneinanderliegend genau ausgerichtet werden.

Erfolgt dabei die Berechnung der weiteren Korrekturdaten für jedes Scannsystem gesondert, dann kann mittels der Korrekturdaten auf jedes Scannsystem gesondert zugegriffen werden und dieses betreffend benachbarte Scannsysteme oder eine Berandung des Baufeldes genau ausgerichtet werden. Es ist aber auch möglich die für jedes Scannsystem ermittelten Korrekturdaten zu einem alle Systeme betreffende Gesamtkorrekturdatensatz zusammen zu fassen. Die Anwendung dieses Gesamtkorrekturdatensatzes auf alle Scannsysteme führt dann konsequenterweise zu einer exakten Ausrichtung der mehreren Scannsysteme zueinander. Die Berechnung der weiteren Korrekturdaten kann auch gesondert bezogen auf die äußeren Grenzen des Baufeldes erfolgen, sodass zum Beispiel die Ränder der Positionslinienmuster zu den Rändern des Baufeldes parallelisiert sind.

Wie bereits angemerkt, können sich die Positionslinienmuster nebeneinander angeordneter Scannsysteme bereichsweise überschneiden. Eine gegenseitige Korrektur und Ausrichtung kann dann in derart erfolgen, dass z. B. die Randlinien von durch unterschiedliche Scannsysteme erzeugten Positionslinienmustern deckungsgleich übereinander gelegt werden können oder zumindest teilweise deckungsgleich ausgerichtet werden können.

Grundsätzlich liegt es auch im Rahmen der Erfindung, Abweichungsdaten von nebeneinander liegenden oder sich bereichsweise überschneidenden Positionslinienmustern bzgl. einer gegenseitigen Verdrehung, eines gegenseitigen Offsets und dergleichen numerisch auf einem Display einer Lasersinter- oder Laserschmelzanlage anzuzeigen. Angezeigt werden kann zum Beispiel "Winkelabweichung 3°". Eine derartige Anzeige gibt dem Benutzer der Anlage die Auskunft, dass eine Korrektur noch nicht abgeschlossen ist und eine manuelle oder teilautomatisierte Korrektur erforderlich ist, um nebeneinander liegende Scannsysteme wirklich gegenseitig so abzustimmen, dass sie ein und das selbe Bild auf dem Baufeld erzeugen können.

Das Flächenelement, das durch einen Laserstrahl eines Scannsystems belichtet wird, kann beschichtet sein. Die Beschichtung kann so ausgebildet sein, dass ein dauerhaft sichtbares Bild durch den Laserstrahl in die Beschichtung eingebrannt wird.

In Weiterbildung der Erfindung ist es auch möglich, das Kalibrierungsverfahren als Teilprogramm in ein Bauprogramm für einen dreidimensionalen Gegenstand zu integrieren und dieses Teilprogramm von Beginn eines Baujobs ablaufen zu lassen, sodass beim Beginn des eigentlichen Baujobs automatisch sichergestellt ist, dass die Scanner der den Baujob durchführenden Anlage wirklich aufeinander abgestimmt sind.

Die Erfindung ist anhand von Ausführungsbeispielen in den Zeichnungsfiguren näher erläutert. Diese zeigen:
- Fig. 1: eine stark vereinfachte schematische Darstellung eines Baufeldes einer Lasersinter- oder Laserschmelzanlage mit darüber angebrachten Scannern sowie einer kalibrierten Kamera vor Durchführung einer Kalibrierung eines Scanners von scannererzeugten Linienmustern;
- Fig. 2: eine Darstellung gem. Fig.1, bei welcher eine kissenförmige Verzerrung gem. Fig. 1 bereits für jeden einzelnen Scanner korrigiert ist;
- Fig. 3: eine Darstellung gem. Fig. 1 und 2, bei welchen eine gegenseitige Ausrichtung und Kalibrierung der Scanner zur Parallelisierung der Positionslinienmuster vorgenommen ist;
- Fig. 4: ein vereinfachtes schematisiertes Flussdiagramm der bei der Kalibrierung ablaufenden Vorgänge;

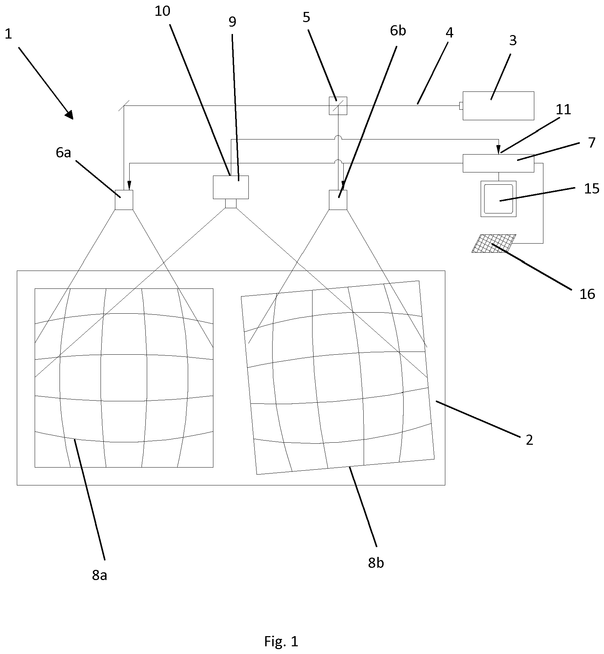

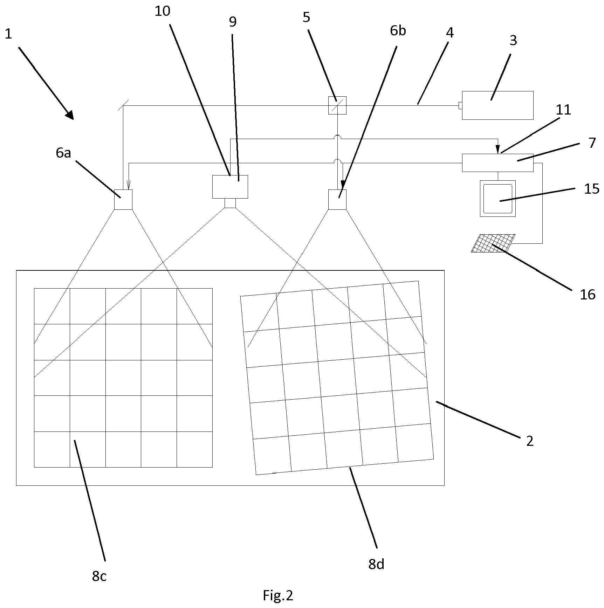

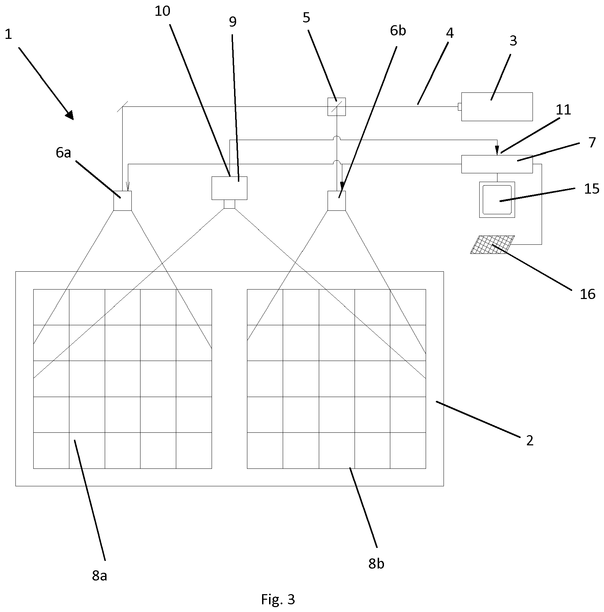

Zunächst wird auf die Zeichnungsfiguren 1 - 3 Bezug genommen. In Zeichnungsfigur 1 sind aus Gründen der Vereinfachung nur die für die Erfindung wesentlichen Elemente einer Lasersinter- oder Laserschmelzanlage 1 dargestellt, nämlich ein Baufeld 2, das durch Bestrahlung eines Lasers 3 abgetastet werden kann. Dazu wird der Strahl 4 des Lasers über einen Strahlteiler 5 zwei Scannern 6a und 6b zugeführt, die über einen Prozessor und Speicher 7 gesteuerten Spiegel der Scanner 6a und 6b lenken die Strahlen 4 des Lasers auf das Baufeld 2 und erzeugen dort die in Fig. 1 noch mit einer kissenartigen Verzerrung behafteten Scanngitter 8a, 8b. Diese Scanngitter werden über eine kalibrierte Kamera 9 abgetastet, der Ausgang 10 der Kamera 9 ist mit einem Eingang 11 des Prozessors 7 verbunden, wodurch die erfassten Linienmuster 8a und 8b in den Speicher des Prozessors 7 eingelesen werden können. Im Prozessor 7 wird eine Feldkorrektur errechnet, was durch Berechnung von Korrekturdaten für jedes Scannsystem 6a und 6b vollzogen wird, wobei die Korrekturdaten Informationen zur Korrektur etwaiger Verzerrungen des Linienmusters 8a, 8b enthalten. Diese Korrekturdaten werden mit zugehörigen Solldaten im Prozessor 7 verknüpft, sodass sich als erstes Resultat eine Korrektur der Linienmuster 8a, 8b ergibt, wie sie in Fig. 2 dargestellt sind. Dabei sind in beiden durch die Scanner 6a und 6b erzeugten Linienmustern 8a und 8b die kissenartigen Verzerrungen behoben, der durch die Spiegel der Scanner erzeugte Verlauf des Laserfokus folgt exakt den Vorgaben des abgespeicherten Musters, dass im Beispielsfall ein schachbrettartiges Muster ist. Allerdings ist auch in Fig. 2 noch ersichtlich, dass das Linienmuster 8b des Scanners 6b gegenüber dem Linienmuster 8a des Scanners 6a um einige Grad insgesamt verkippt ist. Falls also mehrere Scanner über ein und demselben Baufeld angeordnet sind, ist eine gegenseitige Ausrichtung der Linienmuster erforderlich. Diese Linienmuster, nunmehr als Positionslinienmuster 8c, 8d bezeichnet, werden wiederrum von der Kamera eingelesen, wobei auch auf bereits eingelesene Daten zu Linienmustern zurückgegriffen werden kann, die bereits im Speicher 7 abgelegt worden sind, um die kissenartigen Verzerrungen im ersten Korrekturschritt zu beheben. Aus diesen nunmehr vorhandenen Daten werden weitere Korrekturdaten betreffend eine gegenseitige Verdrehung, ein Offset, eine Skalierung und/oder eine Verschiebung im Bezug der Systeme zueinander, das durch Anwendung der weiteren Korrekturdaten auf die mehreren Scannsysteme eine gegenseitige Aus- und Einrichtung mehrerer Scannsysteme zueinander erfolgt. Dies geschieht gemäß der Erfindung ausschließlich softwaremäßig, wobei eine mechanische Grundausrichtung der Scanner zueinander äußerst zweckdienlich ist, die zum Beispiel bei einer Erstinbetriebnahme einer Vorrichtung erfolgen kann. Das Resultat dieser Anwendung der weiteren Korrekturdaten ist in Fig. 3 ersichtlich, nunmehr liegen die Linienmuster beziehungsweise Positionslinienmuster 8c, 8d exakt ausgerichtet nebeneinander und können auch überdeckend angeordnet werden, mit anderen Worten kann der Scanner 6b auch Baufeldbereiche exakt abfahren, die im Positionslinienmusterbereich 8a angeordnet sind.

Grundsätzlich ist es denkbar, die Korrekturdaten oder gemessene Verschiebungen, Winkel und dergleichen auf einem Display 15 der Vorrichtung der Vorrichtung 1 anzuzeigen und ggf. über eine Eingabevorrichtung in Form einer Tastatur 16 manuell in den Korrekturvorgang einzugreifen.

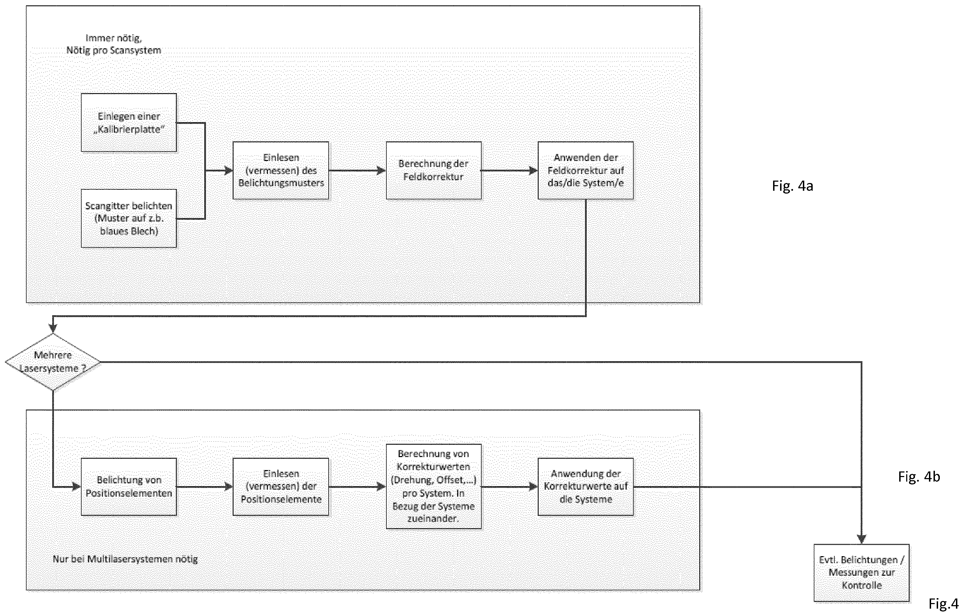

Das Flussdiagramm gemäß Fig. 4 zerfällt in zwei Teilfiguren 4a und 4b. Gemäß Teilfigur 4a kann entweder ein Liniengitter belichtet werden oder eine Kalibrierplatte eingelegt werden, dann erfolgt ein Einlesen oder Vermessen des Belichtungsmusters und eine Berechnung der Feldkorrektur, wobei eine Anwendung der Feldkorrekturdaten auf das oder die Systeme zu einer Behebung von zum Beispiel kissenartigen Verzerrungen erfolgt, wie dies beim Übergang von Fig. 1 zu Fig. 2 zu sehen ist.

Sind mehrere Lasersysteme vorgesehen, so wie dies bei der schematischen Darstellung gemäß Fig. 1 - 3 vorgesehen ist, dann werden die Linienmuster, jetzt genannt Positionslinienmuster belichtet und durch die Kamera 9 vermessen und dann Korrekturdaten betreffend die Drehung, ein Offset-Pro-System in Bezug der Systeme zueinander berechnet. Die Anwendung dieser weiteren Korrekturwerte auf die Systeme führt zu einer gegenseitigen exakten Ausrichtung der Linienmuster zueinander, wie dies beim Übergang von Fig. 2 zu Fig. 3 ersichtlich ist.

### BEZUGSZEICHENLISTE

- 1: Lasersinter- oder Laserschmelzanlage/Vorgang
- 2: Baufeld
- 3: Laser
- 4: Strahl
- 5: Strahlteiler
- 6a/b: Scanngitter, Scannsystem
- 7: Prozessor und Speicher
- 8a/b: Scanngitter
- 8c/d: Positionslinienmuster
- 9: Kalibrierte Kamera
- 10: Ausgang
- 11: Eingang

- 15: Display
- 16: Tastatur

## Patentansprüche

1. Verfahren zur Kalibrierung wenigstens eines Scannsystems (6a/6b) einer Lasersinter (SLS)- oder Laserschmelz (SLM)-Anlage (1), in welcher mittels des wenigstens einen Scannsystems (6a/6b) der gebündelte Strahl (4) wenigstens einer Strahlquelle, insbesondere eines Lasers (3), auf ein Baufeld (2) gelenkt wird, um bei einem Bauvorgang dort ein Sinter- oder schmelzfähiges Baumaterial an- oder aufzuschmelzen und dadurch nach dessen Abkühlung selektiv zu verfestigen, mit den folgenden Kalibrierungs-Verfahrensschritten:
- Erzeugung wenigstens eines Linienmusters, insbesondere eines Scanngitters (8a/8b), durch das wenigstens eine Scannsystem (6a/6b) auf einer Oberfläche in der Ebene des Baufeldes (2), wobei
- das/die Linienmuster auf eine mit einem bereits aufgebrachten Solllinienmuster versehene Oberfläche einer Kalibrierplatte geworfen wird und die Abweichung des durch das wenigstens eine Scannsystem (6a/6b) erzeugten Linienmusters vom Solllinienmuster durch eine über dem Baufeld (2) angeordnete Kamera (9) erfasst und in einen Speicher (7) eingelesen wird;
- Vornahme einer Feldkorrektur des Linienmusters durch Berechnung von Korrekturdaten betreffend das im Wesentlichen eine Scannsystem (6a/6b), die die erforderlichen Informationen zur Korrektur etwaiger Verzerrungen des Linienmusters, insbesondere des Scanngitters (8a/8b) enthalten, und
- nachfolgende Korrektur des Linienmusters zur Vermeidung von Abbildungsfehlern, wobei
- die Abweichung eines temporär auf der Oberfläche der Kalibrierplatte sichtbaren und durch die Kamera (9) über dem Baufeld (2) erfassbaren Linienmusters von einem in die Oberfläche der Kalibrierplatte dauerhaft eingebrachten Solllinienmuster vermessen und derart korrigiert wird, dass das temporär durch das Scannsystem (6a/6b) erzeugte Linienmuster mit dem Solllinienmuster zusammenfällt.

2. Verfahren nach Anspruch 1, wobei
- nach Korrektur der Verzerrungen des Linienmusters bei einer Mehrzahl von Scannsystemen (6a/6b) über ein und demselben Baufeld (2) ein Belichten sowie mittels einer kalibrierten Kamera (9) über dem Baufeld (9), ein Einlesen von Positionslinienmustern, insbesondere Positionsgittern (8c, 8d) der jeweiligen Mehrzahl von Scannsystemen (6a/6b) erfolgt, die hinsichtlich eventueller Verzerrungen bereits korrigiert sind,
- eine Berechnung von weiteren Korrekturdaten betreffend Drehung, Offset, Skalierung und/oder eine Verschiebung in Bezug der Systeme (6a/6b) zueinander derart, dass durch Anwendung der weiteren Korrekturdaten auf mehrere Scannsysteme (6a/6b) eine gegenseitige Aus- und Einrichtung mehrerer Scannsysteme (6a/6b) und der durch sie erzeugten Positionsgitter (8c, 8d) zueinander erfolgt.

3. Verfahren nach Anspruch 1 oder 2, wobei die Berechnung der weiteren Korrekturdaten für jedes Scannsystem (6a/6b) gesondert erfolgt.

4. Verfahren nach Anspruch 3, wobei die für jedes Scannsystem (6a/6b) ermittelte Korrekturdaten zu einem alle Systeme (6a/6b) betreffenden Gesamtkorrekturdatensatz zusammengefasst werden.

5. Verfahren nach Anspruch 2 oder 3, wobei die Berechnung der weiteren Korrekturdaten bezogen auf die äußeren Grenzen des Baufeldes (2) erfolgt.

6. Verfahren nach einem der vorhergehenden Ansprüche 2 - 5, wobei sich die Positionslinienmuster (8c, 8d) nebeneinander angeordneter Scannsysteme (6a/6b) bereichsweise überschneiden.

7. Verfahren nach einem der vorhergehenden Ansprüche 2 - 5, wobei die Positionslinienmuster (8c, 8d) nebeneinanderliegender Scannsysteme (6a/6b) diskret nebeneinander angeordnet sind.

8. Verfahren nach einem der vorhergehenden Ansprüche 2 - 7, wobei die Abweichung von nebeneinanderliegenden Positionslinienmustern (8c, 8d) oder sich bereichsweise überschneidenden Positionslinienmustern (8c, 8d) bzgl. einer gegenseitigen Verdrehung, eines gegenseitigen Offset, einer gegenseitigen Skallierung oder einer Verschiebung nummerisch auf einem Display (15) angezeigt wird.

9. Verfahren nach einem der vorhergehenden Ansprüche, wobei das Flächenelement derart beschichtet ist, dass ein Laserstrahl (4) eines Scannystems (6a/6b) in der Beschichtung ein dauerhaft sichtbares Linienmuster oder Positionslinienmuster (8c, 8d) erzeugt, das durch eine Kamera (9) über dem Baufeld (2) erfassbar ist.

10. Verfahren nach einem der vorhergehenden Ansprüche, wobei sich bei Vorsehen nur eines Scannsystems (6a/6b) die ermittelten Korrekturwerte betreffend Drehung, Skalierung und Verschiebung auf die Position des Linienmusters in der Baukammer oder bezogen auf die Baukammerränder beziehen.

## Claims

1. A method for calibration of at least one scanning system (6a/6b) of a laser sinter (SLS) or laser melt (SLM) facility (1) in which by means of the at least one scanning system (6a/6b) the pencil beam (4) of at least one beam source, in particular of a laser (3), is directed onto a construction field (2) in order by means of a construction process to melt or fuse a construction material capable of sintering or melting and thus through its cooling selectively to solidify with the following calibration method steps:
- generation of at least one line pattern, particularly of a scanning grid (8 a/8 b), through the at least one scanning system (6a/6b) on a surface at the level of the construction field (2), whereby
- the line pattern(s) is (are) projected on the upper surface of the calibration plate already provided with an applied specified line pattern and the deviation of the line pattern produced by at least one scanning system (6a/6b) from the specified line pattern is recorded by a camera (9) configured over the construction field (2) and read into a memory (7);
- execution of a field correction of the line pattern by calculation of correction data regarding in essence the one scanning system (6a/6b) which data contain the necessary information for correction of any distortions of the line pattern, especially of the scanning grid (8 a/8 b) and
- subsequent correction of the line pattern for avoidance of imaging errors, wherein
- the deviation of a detectable line pattern temporarily visible on the surface of the calibration plate and recordable with the camera (9) over the construction field (2) is measured and corrected so that the line pattern produced by the scanning system (6a/6b) coincides with the specified line pattern.

2. A method according to claim 1, wherein
- after correction of the distortion of the line pattern with a number of scanning systems (6a/6b) over one and the same construction field (2), illumination by means of a calibrated camera (9) over the construction field (9), reading in the position line patterns, in particular the position grids (8 c, 8 d) of the respective number of scanning systems (6a/6b), which are already corrected as regards any distortions, is done.
- a calculation of further correction data regarding rotation, offset, scaling, and/or displacement regarding the systems (6a/6b) to each other in such a way that by use of further correction data on several scanning systems (6a/6b) and mutual alignment and accommodation of several scanning systems (6a/6b) and the position grid (8 c/8 d) produced by them is achieved.

3. A method according to claim 1 wherein calculation of further correction data for every separate scanning system (6a/6b) is done.

4. A method according to claim 3 wherein calculation data determined for every scanning system (6a/6b) is aggregated into a combined correction data set covering all systems (6a/6b).

5. A method according to claim 2 or 3 wherein calculation of further correction data is done for the outer limits of the construction field (2).

6. A method according to any of claims 2 - 5 wherein the position line pattern (8 c/8 d) intersects the scanning systems (6a/6b) configured next to each other area by area.

7. A method according to any of claims 2 - 5 wherein the position line patterns (8 c/8 d) of adjacent scanning systems (6a/6b) are configured separately next to each other.

8. A method according to any of claims 2 - 7 wherein the deviation from adjacent position line patterns (8 c/8 d) or the position line patterns (8 c/8 d) that overlap in areas due to mutual rotation, mutual offset, mutual scaling, or numerical displacement is shown on a display (15).

9. A method according to any of the preceding claims wherein the surface unit is illuminated so that a laser beam (4) of a scanning system (6a/6b) produces a constantly visible line pattern or position line pattern (8 c/8 d) detectable by a camera (9) over the construction field (2).

10. A method according to any of the preceding claims wherein with provision of a scanning system (6a/6b) the ascertained correction values concerning rotation, scaling, and displacement relate to the position of the line pattern in the construction chamber or related to the edges of the construction chamber.

## Revendications

1. Procédé d'étalonnage d'au moins un système de balayage (6a/6b) d'au moins une installation de frittage par laser (SLS) ou de fusion par laser (SLM) (1), dans lequel le rayon focalisé (4) d'au moins une source de rayonnement, en particulier d'un laser (3), est orienté sur une zone (2) au moyen de l'au moins un système de balayage (6a/6b), pour y faire fondre un matériau de construction frittable ou fusible dans le cadre d'un procédé de construction et, ce faisant, pour le fixer sélectivement après son refroidissement, avec les étapes d'étalonnage de procédé suivantes :
- Création d'au moins un motif de lignes, en particulier d'une grille de balayage (8a/8b), par l'au moins un système de balayage (6a/6b) sur une surface dans le plan de la zone (2),
- le ou les motifs de lignes étant projeté sur une surface munie d'un motif théorique de lignes déjà appliqué d'une plaque d'étalonnage et l'écart du motif de lignes créé par l'au moins un système de balayage (6a/6b) par rapport au motif théorique de lignes étant détecté par une caméra (9) disposée au-dessus de la zone (2) et enregistré dans une mémoire (7) ;
- Mise en œuvre d'une correction sur zone du motif de lignes par calcul de données correctrices concernant le système de balayage fondamentalement unique (6a/6b), qui contiennent les informations nécessaires à la correction d'éventuelles déformations du motif de lignes, en particulier de la grille de balayage (8a/8b), et
- Correction consécutive du motif de lignes pour éviter des aberrations,
- l'écart d'un motif de lignes temporairement visible sur la surface de la plaque d'étalonnage et détectable par la caméra (9) au-dessus de la zone (2) étant mesuré par rapport à un motif théorique de lignes introduit durablement dans la surface de la plaque d'étalonnage et étant corrigé de sorte que le motif de lignes créé temporairement par le système de balayage (6a/6b) coïncide avec le motif théorique de lignes.

2. Procédé selon la revendication 1, dans lequel
- après correction des déformations du motif de lignes avec une pluralité de systèmes de balayage (6a/6b) au-dessus d'une unique zone (2), il se produit un éclairage ainsi qu'un enregistrement de motifs de lignes de positionnement au moyen d'une caméra étalonnée (9) au-dessus de la zone (2), en particulier de grilles de positionnement (8c, 8d) de la pluralité respective de systèmes de balayage (6a/6b) qui sont déjà corrigées du point de vue d'éventuelles déformations,
- il se produit successivement un calcul d'autres données correctrices concernant la rotation, l'offset, le changement d'échelle et/ou le décalage par rapport aux systèmes (6a/6b), de sorte que se produisent un alignement et une orientation réciproques de plusieurs systèmes de balayage (6a/6b) et de la grille de positionnement (8c, 8d) qu'ils ont créée par utilisation des autres données correctrices sur plusieurs systèmes de balayage (6a/6b).

3. Procédé selon la revendication 1 ou 2, dans lequel le calcul des autres données correctrices pour chaque système de balayage (6a/6b) s'effectue séparément.

4. Procédé selon la revendication 3, dans lequel les données correctrices déterminées pour chaque système de balayage (6a/6b) sont regroupées en un enregistrement de correction totale concernant tous les systèmes (6a/6b).

5. Procédé selon la revendication 2 ou 3, dans lequel le calcul des autres données correctrices se fait rapporté aux limites externes de la zone (2).

6. Procédé selon une des revendications précédentes 2 - 5, dans lequel les motifs de lignes de positionnement (8c, 8d) de systèmes de balayage (6a/6b) disposés les uns à côté des autres se recoupent par endroits.

7. Procédé selon une des revendications précédentes 2 - 5, dans lequel les motifs de lignes de positionnement (8c, 8d) de systèmes de balayage (6a/6b) disposés les uns à côté des autres sont disposées discrètement les uns à côté des autres.

8. Procédé selon une des revendications précédentes 2 - 7, dans lequel l'écart des motifs de lignes de positionnement (8c, 8d) contigus ou des motifs de lignes de positionnement (8c, 8d) se recoupant par endroits par rapport à une rotation l'un par rapport à l'autre, un offset l'un par rapport à l'autre, un changement d'échelle l'un par rapport à l'autre ou un décalage s'affiche numériquement sur un écran (15).

9. Procédé selon l'une des revendications précédentes, dans lequel l'élément de surface est recouvert, de sorte qu'un rayon laser (4) d'un système de balayage (6a/6b) crée dans le revêtement un motif de lignes durablement visible ou un motif de lignes de positionnement (8c, 8d) qui est enregistrable par une caméra (9) au-dessus de la zone (2).

10. Procédé selon l'une des revendications précédentes, dans lequel en ne prévoyant qu'un seul système de balayage (6a/6b), les valeurs correctrices déterminées concernant la rotation, le changement d'échelle et le décalage se rapportent à la position du motif de lignes dans la chambre de construction ou aux bords de la chambre de construction.
